# EUROPÄISCHE PATENTANMELDUNG

(11) **EP 1 013 501 A2**
(43) Veröffentlichungstag der Anmeldung: **28.06.2000**
(21) Anmeldenummer: 99125580.3
(22) Anmeldetag: 21.12.1999
(51) Int. Cl.: B60P 1/00

(54) **Fahrzeugkombination und Verfahren zum Beladen**

(30) Priorität: 22.12.1998 DE 19859505
(71) Anmelder: Kotschenreuther Fahrzeugbau GmbH & Co. KG, 96346 Wallenfels (DE); Kotschenreuther Cargobox-Systeme GmbH & Co. KG, 96515 Sonneberg (DE)
(72) Erfinder: Kotschenreuther, Wolfgang, Pfarrer-Gareis-Str.6 96346 Wallenfels (DE)
(74) Vertreter: Tiedtke, Harro, Dipl.-Ing.

(57) **Zusammenfassung**

Die Erfindung betrifft eine Fahrzeugkombination bestehend aus einem Lastkraftwagen (1) und einem Anhänger (2) zur Güterbeförderung sowie ein Verfahren zum optimalen Beladen einer derartigen Fahrzeugkombination.

Der Erfindung liegt die Aufgabe zugrunde, eine derartige Fahrzeugkombination und ein Verfahren zum optimalen Beladen so vorzusehen, daß die Gesamtladefläche der Fahrzeugkombination auch beim Beladen mit einer Vielzahl von jeweils gleichen Einheiten der Güter möglichst optimal ausnutzbar ist, auch wenn die Einheiten unterschiedliche Abmessungen haben.

Hierzu sind Teillängen (LL1, LL2; LL1', LL2') zwischen einem vordersten äußeren Punkt einer Ladefläche (4) und/oder eines Aufbaus (8) hinter einem Führerhaus (3) des Lastkraftwagens (1) und einer hinteren Begrenzung des Lastkraftwagens (1) sowie zwischen einer vorderen Begrenzung des Anhängers (2) und dem hintersten äußeren Punkt einer Ladefläche (5) und/oder eines Aufbaus (9) des Anhängers (2) jeweils durch Längenverstelleinrichtungen (6, 7) derart veränderbar, daß die Summe der Teillängen (LL1, LL2; LL1', LL2') konstant auf einem vorbestimmten Maß (TL - ZA) haltbar ist.

## Beschreibung

Die Erfindung bezieht sich auf eine Fahrzeugkombination bestehend aus einem Lastkraftwagen und einem Anhänger zur Güterbeförderung und ein Verfahren zum optimalen Beladen dieser Fahrzeugkombination.

Es ist aus dem Stand der Technik, beispielsweise aus der DE 42 37 064 A1 bekannt, Fahrzeugkombinationen aus einem Lastkraftwagen und einem Anhänger zusammenzusetzen. Sowohl der Lastkraftwagen als auch der Anhänger haben jeweils eine vorbestimmte Länge einer Ladefläche. Aufgrund gesetzlicher Bestimmungen darf die Summe der Teillängen der Ladeflächen ein vorbestimmtes Maß nicht überschreiten. Bei herkömmlichen Fahrzeugkombinationen sind die Länge der Ladefläche des Lastkraftwagens und die Länge der Ladefläche des Anhängers unveränderbar. Herkömmlich wurden der Lastkraftwagen und der Anhänger derart zu einer Fahrzeugkombination zusammengestellt, daß die Summe der unveränderbaren Teillängen der Ladeflächen das gesetzlich vorbestimmte Maß genau erreicht.

Die herkömmliche Fahrzeugkombination hat jedoch die folgenden Nachteile. Neben Gütern ohne Normabmessungen sind auch Einheiten von Gütern in Normabmessungen auf die Ladeflächen zu laden. Die Normabmessungen in Längen- und Breitenrichtung der Einheiten der Güter ergeben sich beispielsweise dadurch, daß sie auf Paletten gesetzt werden. In der Praxis haben sich im wesentlichen drei verschiedene Standards durchgesetzt, nämlich Euro-Paletten mit den Maßen 1,20 x 0,80 m, Industrie-Paletten mit den Maßen 1,00 x 1,20 m und Gitterbox-Paletten mit den Maßen 1,24 x 0,84 m. Die Außenabmessungen der Grundflächen dieser verschiedenen Arten der Paletten unterscheiden sich daher sowohl in Länge als auch Breite. Beim Versuch eine Ladefläche des Lastkraftwagens oder des Anhängers mit einer möglichst großen Anzahl an hintereinander angeordneten Paletten zu beladen, ergibt sich häufig ein Totraum für zumindest eine Art der Paletten. Herkömmlich wird versucht, diesem Nachteil dadurch entgegenzuwirken, daß Lastkraftwagen und Anhänger mit jeweiligen Teillängen der Ladeflächen bereitgestellt werden, die optimal auf die Paletten abgestimmt sind. Wenn jedoch auf einer Hinfahrt die Ladefläche mit Euro-Paletten weitgehend optimal ohne einen Totraum beladen werden kann, kann sich für die Rückfahrt eine ungünstigere Beladesituation dann ergeben, wenn Gitterbox-Paletten oder Industrie-Paletten transportiert werden sollen.

Der Erfindung liegt die Aufgabe zugrunde, eine Fahrzeugkombination bestehend aus einem Lastkraftwagen und einem Anhänger zur Güterbeförderung und ein Verfahren zum optimalen Beladen einer derartigen Fahrzeugkombination so vorzusehen, daß die Gesamtladefläche der Fahrzeugkombination auch beim Beladen mit einer Vielzahl von jeweils gleichen Einheiten der Güter möglichst optimal ausnutzbar ist, selbst wenn die Einheiten unterschiedliche Abmessungen haben.

Diese Aufgabe wird erfindungsgemäß hinsichtlich der Fahrzeugkombination durch die Merkmale des Anspruchs 1 und hinsichtlich des Verfahrens durch die Merkmale des Anspruchs 6 gelöst.

Erfindungsgemäß sind Teillängen zwischen einem vordersten äußeren Punkt einer Ladefläche und/oder eines Aufbaus hinter einem Führerhaus des Lastkraftwagens und einer hinteren Begrenzung des Lastkraftwagens sowie zwischen einer vorderen Begrenzung des Anhängers und dem hintersten äußeren Punkt einer Ladefläche und/oder eines Aufbaus des Anhängers jeweils durch Längenverstelleinrichtungen derart veränderbar, daß die Summe der Teillängen konstant auf einem vorbestimmten Maß gehalten werden kann.

Der Fahrer oder Spediteur kann mithilfe der Längenverstelleinrichtungen die Gesamtlänge der Gesamtladefläche des Lastkraftwagens und des Anhängers jeweils so teilen, daß die Teillänge der Einzelladefläche des Lastkraftwagens und die Teillänge der Einzelladefläche des Anhängers jeweils optimal auf die Vielzahl von jeweils gleichen Einheiten der Güter angepaßt ist, auch wenn die Einheiten unterschiedliche Abmessungen haben. Dadurch wird die Entstehung eines Totraums auf der Ladefläche vermieden. Dennoch wird die gesetzliche Bestimmung, daß die Summe der Teillängen der Ladeflächen ein vorbestimmtes Maß nicht überschreiten darf, durch ein Ausgleichen der Teillängen der Einzelladeflächen des Lastkraftwagens und des Anhängers eingehalten.

Ausgehend von einer Fahrzeugkombination, die bereits die maximal zulässige Länge der Gesamtladefläche aufweist, wird zur Anpassung an die unterschiedlichen Abmessungen der jeweils gleichen Einheiten der Güter die Ladefläche des Lastkraftwagens verkürzt oder verlängert, während die Ladefläche des Anhängers zum Ausgleich gegensinnig verstellt wird.

Aufgrund der besseren Aufteilung der Gesamtladefläche in Anpassung an die unterschiedlichen Abmessungen der jeweils gleichen Einheiten können beim hintereinander Anordnen einer Vielzahl von jeweils gleichen Einheiten der Güter bis zu drei Reihen mehr auf der gleichen Gesamtladefläche untergebracht werden. Die Teillänge jeder Einzelladefläche wird auf einen Wert eingestellt, der einem Vielfachen der Längsabmessung der hintereinander anzuordnenden Einheiten entspricht. Auch bei Mischbeladung mit Einheiten in unterschiedlichen Abmessungen ergeben sich Vorteile, weil die Gesamtladefläche immer so aufteilbar ist, daß möglichst wenig Totraum verbleibt. Selbst wenn Güter ohne besondere Normabmessungen auf der Gesamtladefläche unterzubringen sind, führt die erfindungsgemäße Ausbildung zu einer besseren Ausnutzung der Gesamtladefläche.

Vorteilhafte Weiterbildungen sind in den abhängigen Ansprüchen definiert.

Vorzugsweise sind die hintere Begrenzung des Lastkraftwagens durch die lastkraftwagenseitige Längenverstelleinrichtung und die vordere Begrenzung des Anhängers durch die anhängerseitige Längenverstelleinrichtung verschiebbar. Die Längenverstelleinrichtung kann beispielsweise ein Verschiebemechanismus sein, der durch einen hydraulischen Stellantrieb oder ein Zahnstangenantrieb antreibbar ist. Wahlweise kann der Verschiebemechanismus auch von Hand oder mittels eines Gabelstaplers betätigt werden.

Die erfindungsgemäße Fahrzeugkombination ist sowohl bei fest mit dem Lastkraftwagen bzw. Anhänger verbundenen Ladeflächen und/oder Aufbauten als auch bei einfach lösbar angebrachten Ladeflächen und Aufbauten einsetzbar.

Vorzugsweise verändern die Längenverstelleinrichtungen nur die Teillängen der Ladeflächen und/oder Aufbauten, ohne daß tragende Rahmenteile des Lastkraftwagens oder des Anhängers verstellt werden.

Die Erfindung wird nachfolgend anhand bevorzugter Ausführungsbeispiele unter Bezugnahme auf die beigefügten Zeichnungen näher erläutert.

Es zeigen:
- Fig. 1: ein Ausführungsbeispiel einer Fahrzeugkombination, bei der die Teillängen der Ladeflächen des Lastkraftwagens und des Anhängers etwa gleich sind,
- Fig. 2: das Ausführungsbeispiel der Fahrzeugkombination der Fig. 1 mit verstellten Teillängen der Ladeflächen des Lastkraftwagens und des Anhängers,
- Fig. 3: einen bei einem weiteren Ausführungsbeispiel einer Fahrzeugkombination einsetzbaren Wechselbehälter im eingefahrenen Zustand und
- Fig. 4: den Wechselbehälter der Fig. 3 im maximal ausgefahrenen Zustand.

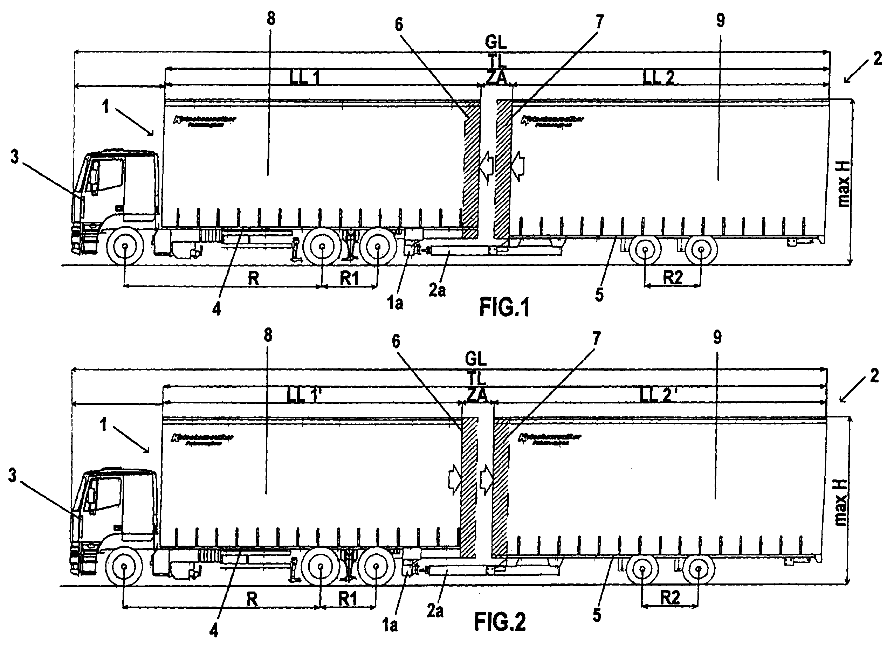

Die Figuren 1 und 2 zeigen ein Ausführungsbeispiel einer Fahrzeugkombination bestehend aus einem Lastkraftwagen 1 und einem Anhänger 2.

Der Lastkraftwagen 1 hat im gezeigten Ausführungsbeispiel drei Achsen, wobei Abstände R und R1 zwischen der mittleren und vorderen Achse sowie zwischen der mittleren und hinteren Achse bestehen. Der Lastkraftwagen 1 hat im wesentlichen oberhalb der vorderen Achse ein Führerhaus 3. Eine Ladefläche 4 liegt hinter dem Führerhaus 3 und erstreckt sich bis über die hinterste Achse des Lastkraftwagens 1, um den Lastkraftwagen 1 nach hinten zu begrenzen. Der Lastkraftwagen 1 weist eine nicht im Detail gezeigte Rahmenkonstruktion auf, auf der die Ladefläche 4 abgestützt ist.

Bei dem in den Figuren 1 und 2 gezeigten Ausführungsbeispiel ist die Ladefläche 4 fest mit der Rahmenkonstruktion des Lastkraftwagens 1 beispielsweise durch Verschraubungen verbunden.

Über der Ladefläche 4 ist ein Aufbau 8, der ein zu beförderndes Gut zumindest vor Witterungseinflüssen schützt. Der Aufbau 8 kann beispielsweise aus einem mit Planen überzogenen Gestänge bestehen, das auf der Ladefläche 4 abgestützt ist. In diesem Fall weist der Aufbau 8 der Ladefläche 4 zusätzlich ringsum aufrechtstehende Planken mit einer relativ geringen Höhe auf, die vorzugsweise abklappbar sind. Ferner kann der Aufbau 8 durchgehende formstabile Vorder-, Rück- und Seitenwände und ein formstabiles Dach aufweisen, die auf der Ladefläche 4 abgestützt sind. In letzterem Fall ist es vorteilhaft, wenn die gesamte Rückwand beispielsweise durch zwei Flügeltüren geöffnet werden kann. Aber auch die anderen formstabilen Teile können öffenbar oder abnehmbar oder mit Zugangsöffnungen ausgebildet sein. Der gezeigte Aufbau 8 ist daher nur als beispielhaft anzusehen und soll den Schutzbereich in keiner Weise einschränken.

Das hintere Ende der Ladefläche 4 und/oder des Aufbaus 8 bildet die hintere Begrenzung des Lastkraftwagens 1. Mit einer nur symbolisch angedeuteten Längenverstelleinrichtung 6 ist die Teillänge LL1 zwischen dem vordersten äußeren Punkt der Ladefläche 4 hinter dem Führerhaus 3 und der hinteren Begrenzung des Lastkraftwagens 1 veränderbar. In anderen Worten ausgedrückt ist die Einzellänge LL1 der Ladefläche 4 und/oder des Aufbau 8 mithilfe der lastkraftwagenseitigen Längenverstelleinrichtung 6 verstellbar. Die Längenverstelleinrichtung 6 kann beispielsweise durch einen teleskopartig verstellbaren Verschiebemechanismus gebildet sein, der durch einen hydraulischen Stellantrieb oder einen Zahnstangenantrieb stufenlos oder abgestuft ein- und ausfahrbar ist. Wahlweise kann der Verschiebemechanismus auch von Hand oder durch einen Stapler betätigbar sein. Durch Ausfahren des Verschiebemechanismus verlängert sich die Teillänge LL1 der Ladefläche 4 und/oder des Aufbaus 8 des Lastkraftwagens 1 bis zu einem vorbestimmten Ausmaß, das derart bestimmt ist, daß sich die Fahreigenschaften des Lastkraftwagens 1 auch bei voller Beladung nur tolerierbar verändern. Durch Einfahren des Verschiebemechanismus wird dagegen die Ladefläche 4 des Lastkraftwagens 1 verkürzt, ebenfalls in einem tolerierbaren Ausmaß ohne wesentliche Veränderung der Fahreigenschaften des Lastkraftwagens 1.

Anstelle des verstellbaren Verschiebemechanismus kann ebenso ein Stecksystem vorgesehen sein. Zum Erweitern der Ladefläche 4 des Lastkraftwagens 1 werden Verlängerungen der Ladefläche 4 und/oder des Aufbaus 8 an der hinteren Begrenzung des Lastkraftwagens 1 aufgesteckt. Die Verlängerungen können in verschiedenen Längen vorhanden sein.

Die Längenverstelleinrichtung 6 verstellt vorzugsweise nur die Ladefläche 4 und/oder den Aufbau 8, ohne daß die Rahmenkonstruktion oder Rahmenteile des Lastkraftwagens 1 verstellt werden.

Am hinteren Ende der Rahmenkonstruktion des Lastkraftwagens 1 ist eine Anhängerkupplung 1a steif angebracht, die mit einer Deichsel 2a eines Anhängers 2 verkuppelbar ist.

Im gezeigten Ausführungsbeispiel ist der Anhänger 2 zweiachsig ausgeführt, wobei die beiden Achsen in einem Abstand R2 voneinander angeordnet sind. Hier ist keine der beiden Achsen lenkbar ausgeführt, so daß sie beide in Fahrtrichtung relativ nahe am Schwerpunkt des Anhängers 2 angeordnet sind. Anstelle der gezeigten zweiachsigen Ausführung kann jedoch ebenso eine einachsige Ausführung oder eine zweiachsige Ausführung mit zumindest einer lenkbaren Achse zum Einsatz kommen. Selbst eine Ausführung als dreiachsiger Anhänger 2 ist problemlos möglich.

Der Anhänger 2 hat ebenso wie der Lastkraftwagen 1 eine nicht gezeigte Rahmenkonstruktion, auf der eine Ladefläche 5 abgestützt ist.

Bei dem in den Figuren 1 und 2 gezeigten Ausführungsbeispiel ist die Ladefläche 5 des Anhängers 2 fest mit der Rahmenkonstruktion des Anhängers 2 beispielsweise durch Verschraubungen verbunden.

Über der Ladefläche 5 ist beim Anhänger 2 ebenso wie beim Lastkraftwagen ein Aufbau 9, der ein zu beförderndes Gut zumindest vor Witterungseinflüssen schützt. Der Aufbau 9 kann in derselben Weise wie der Aufbau 8 des Lastkraftwagens 1 ausgebildet sein.

Das vordere Ende der Ladefläche 5 und/oder des Aufbaus 9 bildet die vordere Begrenzung des Anhängers 2. Mit einer nur symbolisch angedeuteten Längenverstelleinrichtung 7 ist die Teillänge LL2 zwischen der vorderen Begrenzung des Anhängers 2 und dem hintersten äußeren Punkt der Ladefläche 5 veränderbar. In anderen Worten ausgedrückt ist die Einzellänge LL2 der Ladefläche 5 und/oder des Aufbaus 9 mithilfe der anhängerseitigen Längenverstelleinrichtung 7 verstellbar. Die Längenverstelleinrichtung 7 kann in derselben Weise wie die Längenverstelleinrichtung 6 des Lastkraftwagens aufgebaut sein. Die Längenveränderung erfolgt nur in einem derartigen Ausmaß, daß sich die Fahreigenschaften des Anhängers 2 auch bei voller Beladung nur tolerierbar verändern.

Sowohl der Lastkraftwagen 1 als auch der Anhänger 2 sind mit einer nicht gezeigten Längenbestimmungseinrichtung versehen, die jeweils die aktuelle Teillänge LL1, LL2 feststellt. Das Ergebnis ist an das Führerhaus 3 übermittelbar, in dem eine Anzeigeeinrichtung vorgesehen ist, die den Fahrer über die tatsächlichen Teillängen informiert. Gegebenenfalls wird über eine Warneinrichtung ein Signal ausgegeben, wenn die Summe der Teillängen LL1 + LL2 ein vorbestimmtes Maß übersteigt.

Während in Fig. 1 die Ladefläche 4 des Lastkraftwagens 1 voll ausgefahren ist und die Ladefläche 5 des Anhängers 2 voll eingefahren ist, so daß die beiden Teillängen LL1, LL2 etwa einander entsprechen, zeigt die Fig. 2 einen Zustand, bei dem die Ladefläche 4 des Lastkraftwagens 1 voll eingefahren und die Ladefläche 5 des Anhängers voll ausgefahren ist (LL1' < LL2'). Jeder beliebige Zwischenzustand ist stufenlos oder abgestuft je nach Art der Längenverstelleinrichtungen 6, 7 verwirklichbar. Die Teillängen LL1, LL2 der Ladeflächen 4, 5 und/oder der Aufbauten 8, 9 werden mithilfe der Längenverstelleinrichtungen 6, 7 immer so eingestellt, daß die Summe der Teillängen LL1 + LL2 konstant auf einem vorbestimmten Maß TL - ZA gehalten wird. Das vorbestimmte Maß TL - ZA ergibt sich aus dem maximal zulässigen Abstand TL zwischen dem vordersten äußeren Punkt der Ladefläche 4 hinter dem Führerhaus 3 des Lastkraftwagens 1 und dem hintersten äußeren Punkt der Ladefläche 5 des Anhängers 2 der Fahrzeugkombination abzüglich des Abstands ZA zwischen der hinteren Begrenzung des Lastkraftwagens 1 und der vorderen Begrenzung des Anhängers 2.

Das Maß TL beträgt vorzugsweise 16,40 m und das Maß TL - ZA beträgt vorzugsweise 15,65 m. Daraus ergibt sich ZA zu 0,75 m. Der Vollständigkeit halber sei erwähnt, daß GL die Gesamtlänge der Fahrzeugkombination vorzugsweise 18,75 m beträgt.

Während im gezeigten Ausführungsbeispiel die veränderte Teillänge LL2' des Anhängers 2 kleiner als die veränderte Teillänge LL1' des Lastkraftwagens 1 ist, kann die Längenveränderung ebenso in umgekehrter Weise vorgenommen werden.

Ferner müssen die Ausgangswerte für die Teillängen LL1 und LL2 nicht zwingend einander entsprechen.

Der Verstellbereich, innerhalb dem die Teillängen LL1 und LL2 jeweils veränderbar sind, ist vorzugsweise kleiner als 0,6 m, weiter vorzugsweise kleiner als 0,4 m. Im gezeigten Ausführungsbeispiel beträgt der Verstellbereich 0,3 m, so daß jede Teillänge LL1 und LL2 um maximal 30 Zentimeter veränderbar ist.

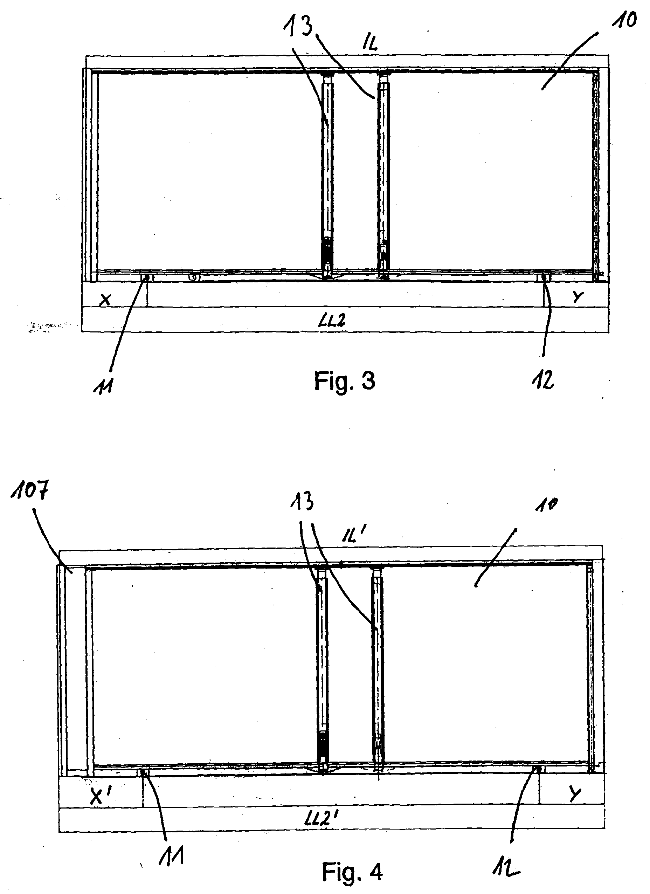

Während in den Figuren 1 und 2 sowohl die Ladeflächen 4, 5 als auch die Aufbauten 8, 9 fest mit der Rahmenkonstruktion des Lastkraftwagens 1 bzw. des Anhängers 2 verbunden sind, zeigen die Figuren 3 und 4 einen bei einem weiteren Ausführungsbeispiel einer Fahrzeugkombination einsetzbaren Wechselbehälter 10, der mit der Rahmenkonstruktion des Lastkraftwagens 1 bzw. des Anhängers 2 einfach lösbar verbunden werden kann.

Der Wechselbehälter 10 ist für einen Anhänger 2 vorgesehen. Die in Fahrtrichtung vordere Begrenzungswand ist mittels einer Längenverstelleinrichtung 107 verstellbar. Im gezeigten Ausführungsbeispiel ist die Längenverstelleinrichtung 107 durch einen Verschiebemechanismus verwirklicht, der ähnlich wie die zuvor genannten Verschiebemechanismen aufgebaut sein kann. Die in Fahrtrichtung nach hinten zeigenden Wand weist vorzugsweise zwei Flügeltüren auf. Die Seitenwände, die vordere Begrenzungswand und das Dach sind vorzugsweise formstabil ausgeführt. Im Inneren befinden sich Stützen bzw. Verstrebungen 13 zur Versteifung des Wechselbehälters 10. An der Unterseite des Wechselbehälters 10 sind auf jeder Längsseite zwei Anschlüsse 11 und 12 angebracht, mit denen der Wechselbehälter mit der Rahmenkonstruktion des Anhängers einfach lösbar verbunden werden kann. Der hintere Anschluß 12 ist im Abstand Y zur hinteren Kante des Wechselbehälters 10 angebracht. Der vordere Anschluß ist im variablen Abstand X zur vorderen Kante des Wechselbehälters 10 angebracht. Im voll eingefahrenen Zustand des Wechselbehälters bestehen nur wenige Zentimeter Unterschied zwischen den Maßen X und Y.

Die Gesamtlänge LL2 der Ladefläche und des Aufbaus des Wechselbehälters 10 im eingefahrenen Zustand beträgt beispielsweise 7,77 m ohne hintere Flügeltüren. Im voll ausgefahrenen Zustand wächst sie auf LL2' = 8,08 m. Die Innenlänge IL ist somit von 7,715 m auf IL' = 8,035 m vergrößerbar.

Selbstverständlich kann auch ein geringfügig abgewandelter Wechselbehälter für den Lastkraftwagen eingesetzt werden. Vorzugsweise ist dann nicht die vordere sondern die hintere Begrenzungswand des Wechselbehälters durch eine Längenverstelleinrichtung verstellbar.

Während bei den gezeigten Ausführungsbeispielen nur jeweils eine der hinteren und vorderen Begrenzungen verstellbar ausgeführt ist, kann erfindungsgemäß auch eine Verstellmöglichkeit von jeweils beiden Begrenzungen vorgesehen sein. Im Fall der Anwendung einer derartigen doppelten Verstellmöglichkeit bei einem Wechselbehälter können die Anschlüsse in Längsrichtung verschiebbar ausgeführt sein. Wahlweise können auch mehrere in Längsrichtung beabstandete Anschlüsse vorgesehen sein, so daß sich der Wechselbehälter in verschiedenen abgestuften Längsrelativlagen auf die Rahmenkonstruktion aufsetzen läßt.

Die Erfindung betrifft eine Fahrzeugkombination bestehend aus einem Lastkraftwagen (1) und einem Anhänger (2) zur Güterbeförderung sowie ein Verfahren zum optimalen Beladen einer derartigen Fahrzeugkombination.

Der Erfindung liegt die Aufgabe zugrunde, eine derartige Fahrzeugkombination und ein Verfahren zum optimalen Beladen so vorzusehen, daß die Gesamtladefläche der Fahrzeugkombination auch beim Beladen mit einer Vielzahl von jeweils gleichen Einheiten der Güter möglichst optimal ausnutzbar ist, auch wenn die Einheiten unterschiedliche Abmessungen haben.

Hierzu sind Teillängen (LL1, LL2; LL1', LL2') zwischen einem vordersten äußeren Punkt einer Ladefläche (4) und/oder eines Aufbaus (8) hinter einem Führerhaus (3) des Lastkraftwagens (1) und einer hinteren Begrenzung des Lastkraftwagens (1) sowie zwischen einer vorderen Begrenzung des Anhängers (2) und dem hintersten äußeren Punkt einer Ladefläche (5) und/oder eines Aufbaus (9) des Anhängers (2) jeweils durch Längenverstelleinrichtungen (6, 7) derart veränderbar, daß die Summe der Teillängen (LL1, LL2; LL1', LL2') konstant auf einem vorbestimmten Maß (TL - ZA) haltbar ist.

## Patentansprüche

1. Fahrzeugkombination bestehend aus einem Lastkraftwagen (1) und einem Anhänger (2) zur Güterbeförderung, bei dem Teillängen (LL1, LL2; LL1', LL2') zwischen einem vordersten äußeren Punkt einer Ladefläche (4) und/oder eines Aufbaus (8) hinter einem Führerhaus (3) des Lastkraftwagens (1) und einer hinteren Begrenzung des Lastkraftwagens (1) sowie zwischen einer vorderen Begrenzung des Anhängers (2) und dem hintersten äußeren Punkt einer Ladefläche (5) und/oder eines Aufbaus (9) des Anhängers (2) jeweils durch Längenverstelleinrichtungen (6, 7) derart veränderbar sind, daß die Summe der Teillängen (LL1, LL2; LL1', LL2') konstant auf einem vorbestimmten Maß (TL - ZA) haltbar ist.

2. Fahrzeugkombination nach Anspruch 1,
**dadurch gekennzeichnet, daß**
die hintere Begrenzung des Lastkraftwagens (1) durch die lastkraftwagenseitige Längenverstelleinrichtung (6) und die vordere Begrenzung des Anhängers (2) durch die anhängerseitige Längenverstelleinrichtung (7) jeweils mittels eines hydraulischen Stellantriebs oder eines Zahnstangenantriebs derart verschiebbar sind, daß auf jeder Ladefläche (4, 5) beim Beladen mit einer Vielzahl von Einheiten eines zu befördernden Guts in vorbestimmten Abmessungen möglichst wenig Totfläche verbleibt.

3. Fahrzeugkombination nach Anspruch 1 oder 2,
**dadurch gekennzeichnet, daß**
die Ladeflächen (4, 5) und/oder Aufbauten (8, 9) fest mit dem Lastkraftwagen (1) bzw. Anhänger (2) verbunden sind.

4. Fahrzeugkombination nach Anspruch 1 oder 2,
**dadurch gekennzeichnet, daß**
die Ladeflächen (4,5) und/oder Aufbauten (8,9) einfach lösbar mit dem Lastkraftwagen (1) bzw. Anhänger (2) verbunden sind.

5. Fahrzeugkombination nach einem der Ansprüche 1 bis 4,
**dadurch gekennzeichnet, daß**
nur die Ladeflächen (4, 5) und die Aufbauten (8, 9) durch die Längenverstelleinrichtungen (6, 7) verstellbar sind, ohne daß tragende Rahmenteile des Lastkraftwagens (1) oder des Anhängers (2) verstellt werden.

6. Verfahren zum optimalen Beladen einer Fahrzeugkombination bestehend aus einem Lastkraftwagen (1) und einem Anhänger (2) zur Güterbeförderung, wobei Teillängen (LL1, LL2; LL1', LL2') zwischen einem vordersten äußeren Punkt einer Ladefläche (4) und/oder eines Aufbaus (8) hinter dem Führerhaus (3) des Lastkraftwagens (1) und einer hinteren Begrenzung des Lastkraftwagens (1) sowie zwischen einer vorderen Begrenzung des Anhängers (2) und einem hintersten äußeren Punkt einer Ladefläche (5) und/oder eines Aufbaus (9) des Anhängers (2) jeweils durch Längenverstelleinrichtungen (6, 7) derart verändert werden, daß die Summe der Teillängen (LL1, LL2; LL1', LL2') konstant auf einem vorbestimmten Maß (TL - ZA) gehalten wird.

7. Verfahren nach Anspruch 6,
**dadurch gekennzeichnet, daß**
die hintere Begrenzung des Lastkraftwagens (1) durch die lastkraftwagenseitige Längenverstelleinrichtüng (6) und die vordere Begrenzung des Anhängers (2) durch die anhängerseitige Längenverstelleinrichtung (7) jeweils mittels eines hydraulischen Stellantriebs oder eines Zahnstangenantriebs derart verschoben werden, daß auf jeder Ladefläche (4, 5) beim Beladen mit einer Vielzahl von Einheiten eines zu befördernden Guts in vorbestimmten Abmessungen möglichst wenig Totfläche verbleibt.
